# EUROPÄISCHE PATENTANMELDUNG

(11) **EP 0 905 092 A2**
(43) Veröffentlichungstag der Anmeldung: **31.03.1999**
(21) Anmeldenummer: 98110202.3
(22) Anmeldetag: 04.06.1998
(51) Int. Cl.: C03B 9/48, C03B 9/347, C03B 9/34

(54) **Geteilte Form zur Herstellung von Glasgegenständen**

(30) Priorität: 25.09.1997 DE 29717189 U
(71) Anmelder: Mafo Systemtechnik Dr.-Ing. A. Zacharias GmbH & Co. KG, D-83317 Teisendorf (DE)
(72) Erfinder: Gerhard, Schuhbeck, 83317 Teisendorf (DE)
(74) Vertreter: Haft, von Puttkamer, Berngruber, Czybulka

(57) **Zusammenfassung**

Bei einer geteilten Form zur Herstellung von Glasgegenständen besteht jedes Formteil (1, 2) aus einem Mantel (3, 4) und einem Einsatz (5, 6), der zumindest im Bereich der Formkanten (15, 16) an der glasberührenden Fläche (17, 18) mit einer verschleißfesten Schicht (20) versehen ist.

## Beschreibung

Die Erfindung bezieht sich auf eine geteilte Form zur Herstellung von Glasgegenständen. Eine solche Form ist meist zweiteilig aufgebaut. Jede Formhälfte ist an einer Formenhalterung der Formmaschine befestigt, um die Form zu schließen und zu öffnen. Bei einer Pressform wird ein meist tropfenförmiger Klumpen geschmolzener Glasmasse mit einem Stempel in dem Formhohlraum der geschlossenen Form ausgepresst. Nach dem Erstarren werden die Formhalterungen auseinandergefahren und der Glasgegenstand entformt. Beim Blas- und Saugformen wird in ähnlicher Weise vorgegangen, jedoch wird dann die plastische Glasmasse durch Einblasen oder Einsaugen in die Formen eingebracht.

Bei der bekannten Form bestehen die Formhälften z.B. aus legiertem Stahl oder legiertem Sphäroguss. Durch die hohe Temperaturdifferenz zwischen der Glasschmelze in dem Formhohlraum und der Umgebungstemperatur tritt ein Verzug der Formhälften der bekannten Form und damit ein Versatz der Formkanten auf, also der Kanten an der Teilungsebene der Formhälften an der glasberührenden Fläche im Formhohlraum. Durch diesen Versatz kann sich am Glasgegenstand eine grobe, sichtbare Naht ausbilden. Die Nahtausbildung wird ferner durch den Verschleiß der bekannten Form im Bereich der Formkanten verstärkt. Auch läßt die Wärmeableitung vom Formhohlraum mit der geschmolzenen Glasmasse nach außen bei der bekannten Form zu wünschen übrig, was einer Verkürzung der Taktzeit und damit einer Erhöhung der Produktionsgeschwindigkeit entgegensteht.

Aufgabe der Erfindung ist es, eine geteilte Form bereitzustellen, mit der Glasgegenstände mit einer sauberen Naht mit hoher Produktionsgeschwindigkeit hergestellt werden können.

Es wird erfindungsgemäß mit der im Anspruch 1 gekennzeichneten geteilten Form erreicht. In den Unteransprüchen sind vorteilhafte Ausgestaltungen der erfindungsgemäßen Form wiedergegeben.

Die erfindungsgemäße Form weist einen Einsatz auf, der den Formhohlraum umschließt, und um den Einsatz einen Mantel. Sie kann zwei oder mehrteilig ausgebildet sein. Jede Formhälfte bzw. jedes Formteil ist dabei aus einem Einsatzteil und einem Mantelteil gebildet.

Der Mantel bzw. das Mantelteil besteht aus einem leicht bearbeitbarem Material relativ guter Wärmeleitfähigkeit, z.B. unlegiertem Stahl, wie Baustahl oder Grauguss.

Durch die gute Bearbeitbarkeit können in dem Mantel beispielsweise Kühlkanäle an der Berührungsfläche zwischen dem Mantel und dem Einsatz vorgesehen sein. Durch die Kühlkanäle kann ggf. auch Druckluft geblasen werden.

Die Kühlkanäle erstrecken sich vorzugsweise bis zum Bereich des Wärmeschwerpunkts der Form. Dieser Wärmeschwerpunkt wird im allgemeinen durch den Bereich gebildet, in dem sich die geschmolzene Glasmasse zunächst befindet, bevor sie mit dem Stempel oder durch Blasen oder Saugen über den Formhohlraum verteilt wird. Eine zusätzliche Kühlung ist daher insbesondere in diesem Bereich zur Erhöhung der Produktionsgeschwindigkeit von Bedeutung.

Zudem kann der leicht zu bearbeitende Mantel ohne Schwierigkeiten mit Bohrungen, Nuten und dgl. z.B. zur Befestigung an der Formenhalterung versehen werden.

Der Einsatz besteht aus einem Material, das sich vor allem durch seine hohe Wärmeleitfähigkeit auszeichnet, sowie durch eine verhältnismäßig hohe Härte. Er kann z.B. aus Reinchrom, Reinnickel, einer Chrom- oder Nickelbasislegierung, beispielsweise eine Nickel-Berillium-Legierung, wie NiBe2, aus pulvermetalurgischen Stählen oder z.B. Stellit-6 oder Stellit-21 bestehen.

Da sowohl der Mantel wie der Einsatz der erfindungsgemäßen Form aus einem relativ gut wärmeleitendem Material bestehen, kann die Wärme entsprechend schnell von dem Formhohlraum nach außen abgeführt und damit eine entsprechend kurze Taktzeit erreicht werden.

Das Einsatzteil ist an dem Mantelteil mit einer formschlüssigen Verbindung befestigt, die höchstens eine geringfügige Verdrehung von weniger als 1 mm, z.B. 0,2 mm, zuläßt, zwecks gegenseitiger sauberer Auflage der Formennaht; eine Längenausdehnung in axialer Richtung ist hingegen frei möglich. Diese formschlüssige Verbindung ist vorzugsweise im Bereich des Wärmeschwerpunkts der Form angeordnet. Dadurch wird ein Wärmeverzug der Formteile weitgehend unterbunden.

Der Einsatz der erfindunsgemäßen Form ist zumindest im Bereich der Formkanten an der glasberührenden Fläche mit einer verschleißfesten Schicht oder Panzerung versehen. Dadurch wird ein Verschleiß der Formkanten unterdrückt. Zusammen mit dem geringen Wärmeverzug der erfindungsgemäßen Form ist damit eine saubere Naht an dem hergestellten Glasgegenstand gewährleistet.

Die verschleißfeste Schicht wird vorzugsweise durch Auftragsschweißen, Flammspritzen oder heißes isostatisches Pressen (HIP) aufgebracht. Sie kann aus einer Legierung auf Nickel- oder Kobaltbasis bestehen, z.B. einer Kobaltlegierung mit 25-35% Cr, 0-10% W, bis 2% C, 0-5% Ni und 0-8% Mo, wie Stellit-6 (28% Cr, 5% W, 1% C, Rest: Co) oder Stellit-21 (27% Cr, 0,2% C, 2% Ni, 6% Mo, Rest: Co) oder einer Ni-Legierung mit 1 bis 6% Fe, 2-5% Si, bis 3% B, 0-10% Cr und bis zu 0,5% C, wie Deloro alloy Nr. 40G (7,5% Cr, 0,3% C, 5% Fe, 4% Si, 1,2% B, Rest: Ni) oder Deloro alloy Nr. 42K (0,1% C, 1% Fe, 3% Si, 2% B, Rest: Ni), wobei die %-Angaben jeweils Gewichts-% darstellen.

Die verschleißfeste Schicht kann auch die gesamte glasberührende Fläche des Einsatzes der Form bedecken.

Da verschleißfeste Materalien im allgemeinen eine geringe Wärmeleitfähigkeit besitzen, ist die verschleißfeste Schicht möglichst dünn ausgebildet. Sie kann eine Dicke von 0,1 mm bis 5 mm, insbesondere 1 mm bis 2 mm aufweisen.

Die erfindungsgemäße geteilte Form kann als Press-, Blas- oder Saugform ausgebildet sein. Mit ihr können beliebige Glasgegenstände hergestellt werden, also massive Pressglasgegenstände ebenso wie Glashohlkörper, beispielsweise Flaschen oder Trinkgläser.

Nachstehend ist eine Ausführungsform der erfindungsgemäßen Form zur Herstellung von Glasgegenständen anhand der Zeichnung näher erläutert.

Dabei zeigen:
- Fig. 1: eine teilweise geschnittene Draufsicht auf die Form von unten;
- Fig. 2: eine Ansicht einer Formhälfte; und
- Fig. 3: einen Schnitt entlang der Linie III-III in Fig. 1 durch den unteren Abschnitt der Form, wobei die verschleißfeste Schicht die gesamte glasberührende Fläche bedeckt.

Die Form besteht aus zwei Formhälften 1, 2, und jede Formhälfte 1, 2 aus einem Mantelteil 3, 4 und einem Einsatzteil 5, 6.

Der Mantel aus den beiden Mantelteilen 3, 4 und der Einsatz aus den beiden Einsatzteilen 5, 6 werden jeweils durch zur Längsachse 7 der Form koaxiale Hohlzylinder gebildet. Die Mantelteile 3, 4 und Einsatzteile 5, 6 jeder Formhälfte liegen also mit einer zylindrischen Berührungsfläche 8 vollflächig aneinander an.

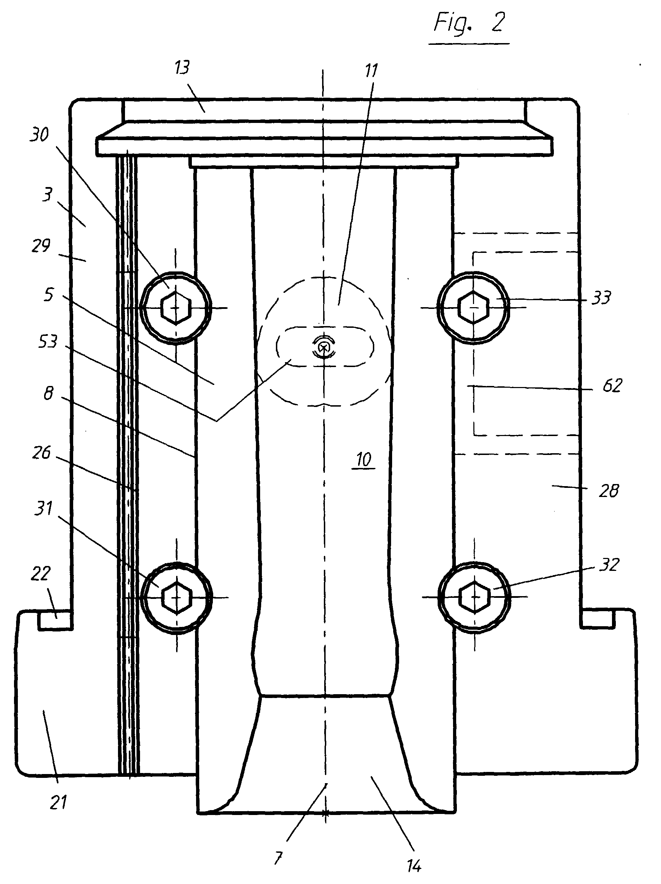

Die Einsatzteile 5, 6 umschließen den Formhohlraum 10, in den die Glasschmelze 11 eingebracht wird, zunächst in Form eines Tropfens, wie in Fig. 2 gestrichelt dargestellt.

Die in der Zeichnung dargestellte Form dient zur Herstellung einer Babysaugflasche. Die koaxiale Ausnehmung 13 bzw. 14 am oberen bzw. unteren Ende dient jeweils als Zentrierung für die Formhälften eines weiteren nicht dargestellten Werkzeugs, mit dem das Mündungsteil bzw. der Boden der Flasche hergestellt wird.

Der Glasschmelzetropfen 11 wird mit einem nicht dargestellten Stempel zu einer Glasvorform ausgepresst, aus der dann in einer nicht dargestellten Blasform die Flasche geblasen wird.

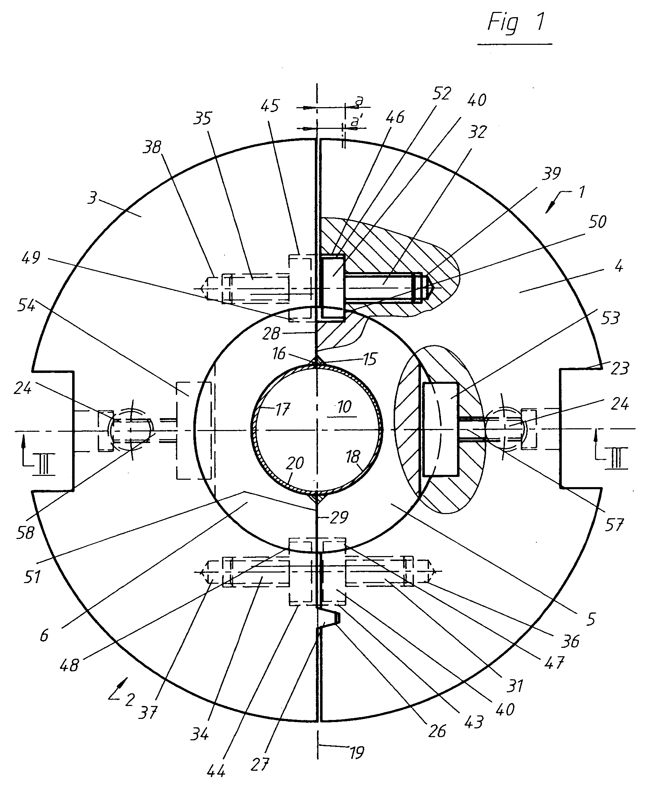

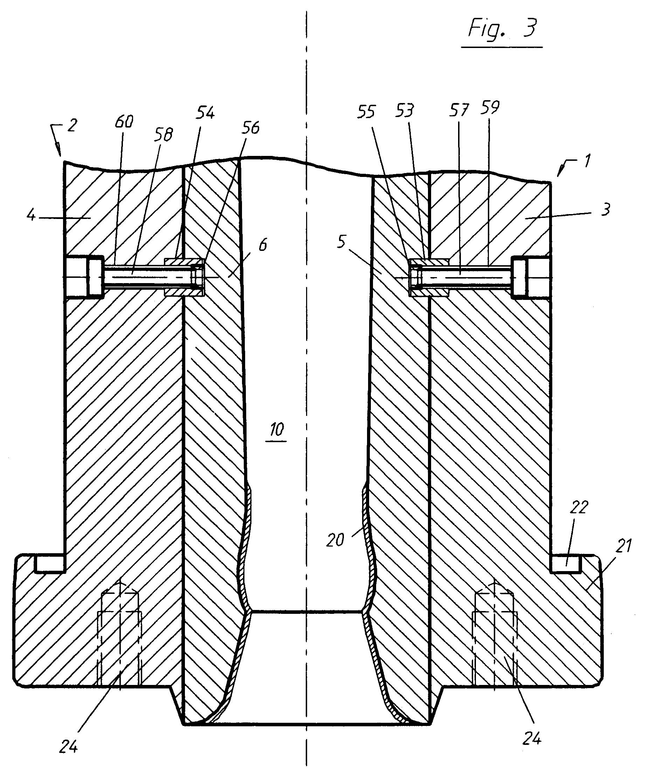

Die Einsatzteile 5, 6 sind an ihrer glasberührenden Innenfläche 17, 18 mit einer verschleißfesten Schicht 20 versehen (Fig. 3). Die verschleißfeste Schicht oder Panzerung kann, wie in Fig. 1 durch die Schicht 20' dargestellt, auch lediglich im Bereich der Kanten 15, 16 zwischen den glasberührenden Innenflächen 17, 18 und den Teilungsflächen 28, 29 in der Teilungsebene 19 der Einsatzteile 5, 6 und der Mantelteile 3, 4 vorgesehen sein.

Jedes Mantelteil 3, 4 weist zur Befestigung der Formhälfte 1, 2 an einer nicht dargestellten Formhalterung der Formmaschine einen Bund 21 mit einer Ringnut 22 (Fig. 2), Längsnuten 23 (Fig. 1) und Bohrungen 24 (Fig. 3) auf.

Um die Formhälften 1, 2 in radialer Richtung zu fixieren, ist eine formschlüssige Verbindung vorgesehen, die aus einer an der Teilungsfläche 29 des Mantelteils 4 vorgesehenen Längsnut 26 besteht, in die eine an der Teilungsfläche 28 des anderen Mantelteils 3 vorgesehene Längsrippe 27 eingreift. Die Ausdehnung der Form in Längsrichtung wird dadurch nicht beeinträchtigt.

Zur Fixierung der Einsatzteile 5, 6 an den Mantelteilen 3, 4 sind an jeder Formhälfte 1, 2 an den beiden Teilungsflächen 28, 29 beiderseits des vom Hohlraum 10 Kopfschrauben 30 bis 35 vorgesehen, die in tangential verlaufende Gewindebohrungen 36 bis 39 in den Mantelteilen 3, 4 eingreifen. Der Kopf 40 jeder Kopfschraube 30 bis 33 ist vollständig in einer Ausnehmung 43 bis 46 in der Teilungsfläche 28, 29 der Mantelteile 3, 4 versenkt.

An die Ausnehmung 43 bis 44 in den Mantelteilen 3, 4 schließt sich eine Ausnehmung 47 bis 50 an der Teilungsfläche 28, 29 der Einsatzteile 5, 6 an. Die Ausnehmungen 43 bis 46 in den Mantelteilen 3, 4 und die jeweils benachbarten Ausnehmungen 47 bis 50 in den Einsatzteilen 5, 6 bilden zusammen eine kreisförmige Ausnehmung zur Aufnahme des jeweiligen Schraubenkopfes 40

Durch die in die Ausnehmungen 47 bis 50 in den Einsatzteilen 5, 6 eingreifende Köpfe 40 der Kopfschrauben 30 bis 35 wird das Einsatzteil 5, 6 am Mantelteil 3, 4 fixiert. Wie in Fig. 1 anhand des Kopfes 40 dargestellt, ist der Kopf 40 in der Ausnehmung 47 des Einsatzteiles 3 mit einem seitlichen Spiel 52 versenkt angeordnet, um eine gewisse gegenseitige Verschiebung der Einsatzteile 5, 6 und der Mantelteile 3, 4 in Längsrichtung sicherzustellen.

Die Tiefe a der Ausnehmungen 47 bis 50 in den Einsatzteilen 5, 6 ist größer als die Tiefe a' der Ausnehmungen 43 bis 46 in den Mantelteilen 3, 4.

Dadurch sind die Einsatzteile 5, 6 in den Mantelteilen 3, 4 mit einem Spiel drehbar gelagert, das der Differenz zwischen a und a' entspricht. Dieses Spiel kann z.B. 0,1 mm betragen. Durch diese schwimmende Lagerung der Einsatzteile 5, 6 wird der Spalt 51 an den Teilungsflächen 28, 29 der Einsatzteile 5, 6 dicht verschlossen.

Die Einsatzteile 5, 6 sind an den Mantelteilen 3, 4 ferner durch eine formschlüssige Verbindung fixiert, die eine gegenseitige Verschiebung der Einsatzteile 5, 6 und der Mantelteile 3, 4 in Längsrichtung verhindern.

Diese formschlüssige Verbindung wird durch eine Passfeder 53, 54 an jedem Mantelteil 3, 4 gebildet, die in einer entsprechende Ausnehmung 55, 56 im Mantelteil sitzt und in das Einsatzteil 5, 6 eingreift. Die Passfedern 53, 54 sind an einer Kopfschraube 57, 58 befestigt, die in einer Radialbohrung 59, 60 in dem Mantelteil 3, 4 angeordnet ist. Die formschlüssige Verbindung ist vorzugsweise in dem Bereich des Wärmeschwerpunkts der Form angeordnet, der sich im allgemeinen dort befindet, wo der Glasschmelzetropfen 11 sitzt, bevor er durch den Stempel ausgepresst wird.

Um die Form zu kühlen, sind in den Mantelteilen 3, 4 Kühlkanäle 62 vorgesehen, die entlang der Berührungsfläche 8 zwischen den Mantelteilen 3, 4 und den Einsatzteilen 5, 6 verlaufen. Die Kühlkanäle 62, die in Fig. 2 gestrichelt dargestellt sind, erstrecken sich im Bereich des Wärmeschwerpunkts (Glasschmelzetropfen 11) der Form und nach außen.

Zum Austausch der Einsatzteile 5, 6 wird die Form geöffnet, worauf die Schrauben 30 bis 35 entfernt werden. Anschließend wird das betreffende Einsatzteil 5, 6 nach innen gezogen, um die Passfedern 53, 54 und damit das Einsatzteil 5, 6 vom Mantelteil 3 bzw. 4 zu lösen.

## Patentansprüche

1. Geteilte Form zur Herstellung von Glasgegenständen, dadurch gekennzeichnet, dass jedes Formteil (1, 2) aus einem Mantel (3, 4) und einem Einsatz (5, 6) besteht, wobei der Einsatz (5, 6) zumindest im Bereich der Formkanten (15, 16) an der glasberührenden Fläche (17, 18) mit einer verschleißfesten Schicht (20, 20') versehen ist.

2. Form nach Anspruch 1, dadurch gekennzeichnet, dass der Mantel (3, 4) aus einem leicht bearbeitbarem Metall besteht.

3. Form nach Anspruch 2, dadurch gekennzeichnet, dass das Metall unlegierter Stahl oder Grauguss ist.

4. Form nach einem der vorstehenden Ansprüche, dadurch gekennzeichnet, dass der Einsatz (5, 6) aus einem Metall hoher Wärmeleitfähigkeit besteht.

5. Form nach Anspruch 4, dadurch gekennzeichnet, dass das Metall Chrom, Nickel, eine Chrom- oder Nickellegierung oder Stellit ist.

6. Form nach einem der vorstehenden Ansprüche, dadurch gekennzeichnet, dass die verschleißfeste Schicht (20, 20') durch Auftragsschweißen, Flammspritzen oder heißes isostatisches Pressen aufgebracht ist.

7. Form nach einem der vorstehenden Ansprüche, dadurch gekennzeichnet, dass die verschleißfeste Schicht (20, 20') aus einer Nickel- oder Kobaltbasislegierung oder Stellit besteht.

8. Form nach einem der vorstehenden Ansprüche, dadurch gekennzeichnet, dass die verschleißfeste Schicht (20) die gesamte glasberührende Fläche (17, 18) bedeckt.

9. Form nach einem der vorstehenden Ansprüche, dadurch gekennzeichnet, dass die verschleißfeste Schicht (20, 20') eine Dicke von mindestens 0,1 mm aufweist.

10. Form nach einem der vorstehenden Ansprüche, dadurch gekennzeichnet, dass in dem Mantel (3, 4) Kühlkanäle (62) vorgesehen sind.

11. Form nach Anspruch 10, dadurch gekennzeichnet, dass sich die Kühlkanäle (62) an der Berührungsfläche (8) zwischen Mantel (3, 4) und Einsatz (5, 6) und/oder sich durch den Mantel (3, 4) zu der Berührungsfläche (8) zwischen Mantel (3, 4) und Einsatz (5, 6) erstrecken.

12. Form nach Anspruch 11 oder 12, dadurch gekennzeichnet, dass sich die Kühlkanäle (62) zumindest zu dem Bereich des Wärmeschwerpunkts der Form erstrecken.

13. Form nach einem der vorstehenden Ansprüche, dadurch gekennzeichnet, dass zur formschlüssigen Verbindung der Formteile (1, 2) an einer Teilungsfläche (28, 29) des einen Mantelteils (3, 4) eine Längsnut (26) und an dem anderen Mantelteil (3, 4) ein in die Längsnut (23) eingreifender Vorsprung (27) vorgesehen ist.

14. Form nach einem der vorstehenden Ansprüche, dadurch gekennzeichnet, dass zur Befestigung der Einsatzteile (5, 6) an den Mantelteilen (3, 4) Kopfschrauben (30 bis 35) vorgesehen sind, die in Bohrungen (36 bis 39) in den Teilungsflächen (28, 29) der Mantelteile (3, 4) eingeschraubt sind, wobei in den Teilungsflächen (28, 29) in den Mantelteilen (3, 4) und den Einsatzteilen (5, 6) jeweils eine Ausnehmung (43 bis 46) bzw. (47 bis 50) zur Versenkung des Schraubenkopfes (38) vorgesehen ist.

15. Form nach Anspruch 14, dadurch gekennzeichnet, dass zur schwimmenden Lagerung der Einsatzteile (5, 6) die Tiefe (a) der Ausnehmungen (47 bis 50) in den Einsatzteilen (5, 6) größer ist als die Tiefe (a') der Ausnehmungen (43 bis 46) in den Mantelteilen (3, 4).

16. Form nach einem der vorstehenden Ansprüche, dadurch gekennzeichnet, dass zur formschlüssigen Verbindung der Einsatzteile (5, 6) an den Mantelteilen (3, 4) eine Passfeder (53, 54) an jedem Mantelteil (3, 4) oder Einsatzteil (5, 6) vorgesehen ist, die in eine entsprechende Ausnehmung (55, 56) in dem Einsatzteil (5, 6) bzw. dem Mantelteil (3, 4) eingreifen.

17. Form nach Anspruch 16, dadurch gekennzeichnet, dass die Ausnehmung (55, 56) in dem Einsatzteil (5, 6) und die Passfeder (53, 54) an dem Mantelteil (3, 4) vorgesehen und die Passfeder (53, 54) an einer Schraube (57, 58) befestigt ist, die in einer Radialbohrung (59, 60) im Mantelteil (3, 4) angeordnet ist.

18. Form nach Anspruch 16 oder 17, dadurch gekennzeichnet, dass die formschlüssige Verbindung im Bereich des Wärmeschwerpunkts der Form angeordnet ist.
